Europäisches Patentamt

European Patent Office

Office européen des brevets

(11) Publication number: **0 456 367 A1**

# EUROPEAN PATENT APPLICATION

(21) Application number: 91303504.4

(22) Date of filing: 19.04.91

(51) Int. Cl.⁵: **G01D 5/16**

(30) Priority: 01.05.90 GB 9009812

(43) Date of publication of application:
13.11.91 Bulletin 91/46

(84) Designated Contracting States:
DE FR GB

(71) Applicant: ROVER GROUP LIMITED
Fletchamstead Highway
Canley Coventry CV4 9DB(GB)

(72) Inventor: Talbot, Kevin Trevor
122 Dimbles Lane
Lichfield, Staffs.(GB)

(74) Representative: Burrage, David John et al
Rover Group Limited, Patent & Trade Mark
Department, Cowley Body Plant
Cowley, Oxford OX4 5NL(GB)

(54) A displacement sensing system.

(57) A displacement sensing system is disclosed in which a source of direct current electrical potential (11) is connected to first and second potentiometric displacement sensors (12, 13) the displacement sensors being mechanically coupled together to move in unison with a device (26) the displacement of which is to be sensed. The first and second potentiometric displacement sensors (12,13) are cross coupled so that for a pre-determined displacement of the device (26) in one direction the output from the first displacement sensor (12) increases by a unit amount and the output from the second displacement sensor (13) decreases by a unit amount.

Signal analysing means (14, 15, 16) is attached to said first and second displacement sensors to provide a measure of signal corruption thereby allowing a more accurate measurement of the position of the device (26) to be obtained.

Fig. 1

Rank Xerox (UK) Business Services

This invention relates to a displacement sensing system and in particular to a displacement sensing system for a motor vehicle.

It is known to use a potentiometer as a displacement transducer for indicating the position of a moveable control lever such as the throttle pedal on a motor vehicle.

It is a problem with such prior art displacement sensing systems that electrical interferance can corrupt the output from the transducer in such a way as to produce a false value.

It is an object of this invention to provide a displacement sensing system and transducer therefor in which the problems of the prior art are overcome.

According to the invention there is provided a displacement sensing system comprising, a source of direct current electrical potential, a first potentiometric displacement sensor having a first resistance means connected to said source of electrical potential and a first moveable pickup in contact with said resistance means to provide a variable potential to a first potential difference sensing means depending upon its position on the first resistance means, a second potentiometric displacement sensor having a second resistance means connected to said source of electrical potential and a second moveable pickup in contact with said resistance means to provide a variable potential to a second potential difference sensing means depending upon its position on the second resistance means, the first and second moveable pickups being mechanically coupled together to move in unison with a device the displacement of which is to be sensed wherein the first and second potentiometric displacement sensors are so connected that for a pre-determined displacement of the device in one direction the potential difference as sensed by the first potential difference sensing means increases by a unit amount and the potential difference as sensed by the second potential difference sensing means decreases by a unit amount and when the device is moved a predetermined displacement in the opposite direction the potential difference as sensed by the first potential difference sensing means decreases by a unit amount and the potential difference as sensed by the second potential difference sensing means increases by a unit amount.

Preferably the system may further comprise a signal analysing means connected to said first and second potential difference sensing means and operative to add the signal received from the first potential difference sensing means to the signal received from the second potential difference sensing means.

Advantageously, the signal analysing means is operative to subtract the signal received from one of the first and second potential difference sensing means from the signal received from the other of the first and second potential difference sensing means.

The first and second potential sensing means may be analogue to digital converters.

The invention will now be described by way of example with reference to the accompanying drawing of which:-

Figure 1    is a schematic representation of a displacement sensing system according to the invention;

Figure 2    is a graph showing the relationship between potential difference and displacement;

Figure 3    is a circuit diagram showing one form of voltage divider circuit;

Figure 4    is a graph showing the relationship between true position of a movable pick-up and time;

Figure 5    is a graph showing the relationship between voltage and time for two outputs, A and B, received by potential difference sensors;

Figure 6    is a graph showing the relationship between voltage and time for two functions; S (output B - output A + V max); and C (output A + output B - V max), and

Figure 7    is a graph showing the relationship between voltage and time for S showing the effect of applying a scaling factor.

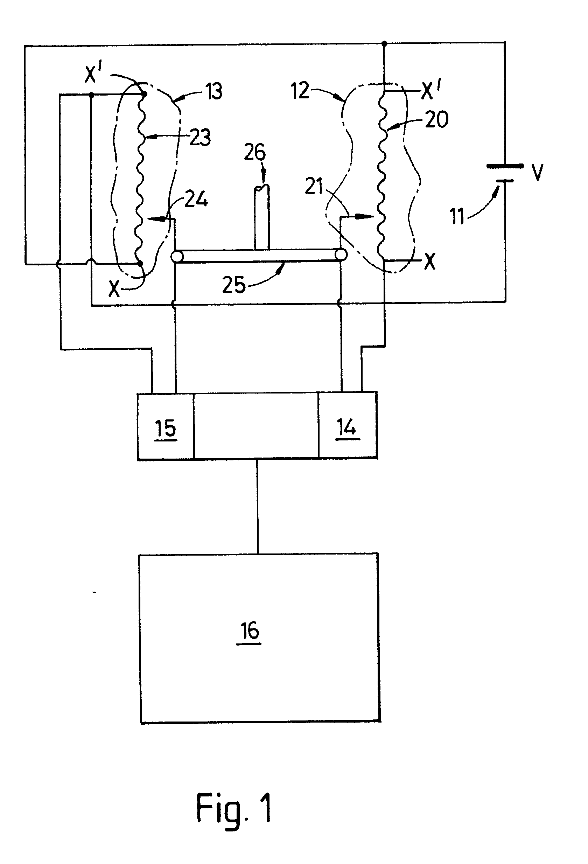

With reference to Figure 1 there is shown a displacement sensing system having a source of direct current potential difference 'V' volts in the form of a battery 11, a first potentiometric displacement sensor 12, a second potentiometric displacement sensor 13, a first potential difference sensing means in the form of a first analogue to digital converter 14, a second potential difference sensing means in the form of a second analogue to digital converter 15 and signal analysing means in the form of a microprocessor 16.

The first potentiometric displacement sensor 12 comprises a resistive track 20 and a moveable pickup 21 in contact with the resistive track 20.

The second potentiometric displacement sensor 13 comprises a resistive track 23 and a moveable pickup 24 in contact with the resistive track 23.

The moveable pickup 21 of the first sensor 12 is mechanically connected to the moveable pickup 24 of the second sensor 13 by a link 25 thereby ensuring the pickups 21, 24 move in unison with each other and with the link 25.

The link 25 is connected to a device, the displacement of which is to be sensed, such as the accelerator pedal linkage rod 26 of a motor vehicle fuel supply system.

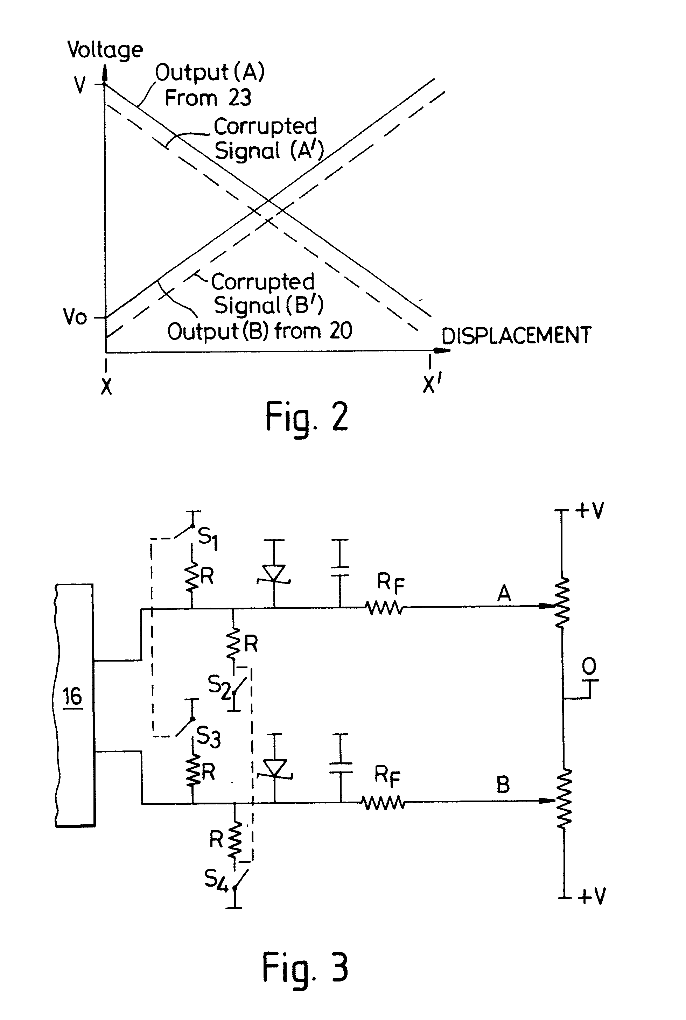

If the moveable pickups 21, 24 are in the position X as shown on Figure 1 then the analogue to digital converter 14 will perceive a potential difference of substantially zero volts $V_o$ and the analogue to digital converter 15 will perceive a potential difference of substantially 'V' volts, as shown in Figure 2. As the pickup 21 is moved towards a position X' the voltage perceived by the analogue to digital converter 14 will increase until at the position X' it will be substantially equal to 'V' volts. As the pickup 24 moves towards the position X' the potential difference perceived by the analogue to digital converter 15 will reduce until at the position X' it is substantially zero.

Therefore, for a pre-determined displacement of the rod 26 in one direction, the potential difference as sensed by the converter 14 increases by a unit amount and the potential difference as sensed by the converter 15 decreases by a unit amount. And when the rod 26 is moved a predetermined amount in the opposite direction the potential difference as sensed by the converter 14 decreases by a unit amount and the potential difference as sensed by the converter 15 increases by a unit amount.

The analogue to digital converters 14 and 15 supply voltage signals indicative of the perceived voltage to the microprocessor 16.

If there is interference the potential difference perceived by the converters 14 and 15 will be different from the true potential difference, as shown by the lines A' and B' on Figure 2, and it is these potential differences that will actually be sensed by the converters 14, 15.

The microprocessor 16 performs two separate checks using the signals received from the converters 14, 15. Firstly it adds the signals together to give a signal indicative of the level of interference and secondly it subtracts one from the other to give a signal in which the interference is cancelled.

It then uses the signal indicative of interference in combination with the subtracted signal to provide a scaled signal indicative of the true position of the rod 26.

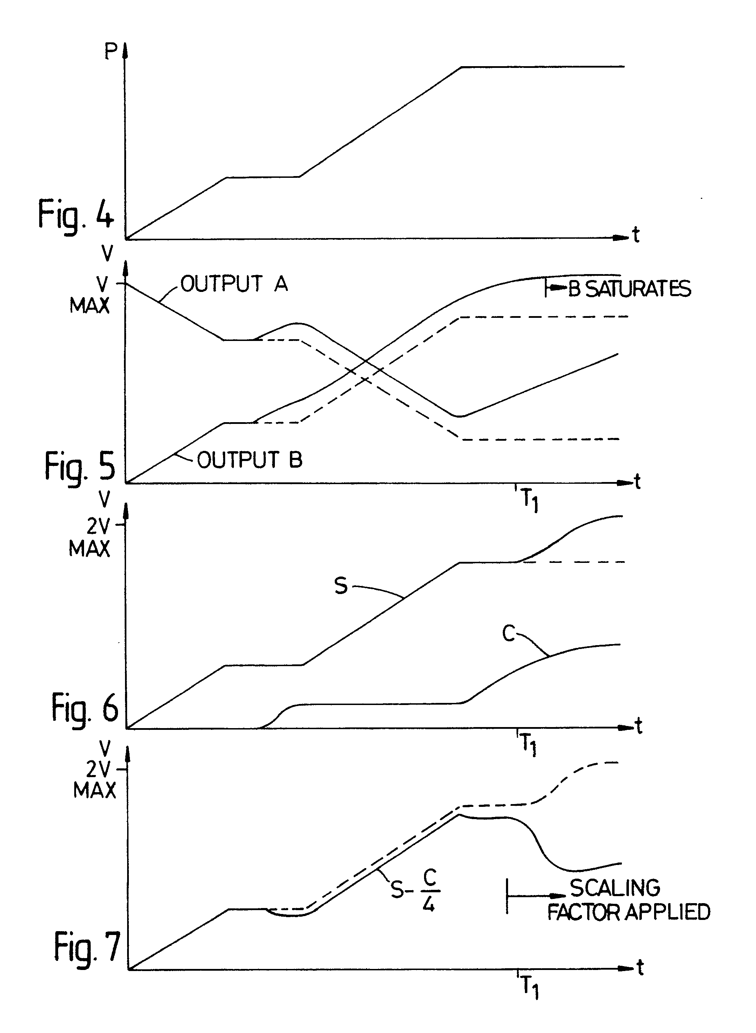

Referring to figures 4 to 7, figure 4 simply shows the true position of the rod 26 plotted against time, for a given set of movements of the rod.

Figure 5 plots perceived voltage against time for converters 14 (shown as output A) and 15 (shown as output B). The solid lines depict the outputs as corrupted by a corrupting signal and the dotted lines show the outputs, as they would be if uncorrupted. It will be seen that output B reaches saturation at V max. When this occurs it becomes necessary to apply a scaling factor to the outputs in order to obtain an accurate measure of the signal corruption.

Figure 6 plots the result of certain computations by the microcomputer 16. The solid line S corresponds to output B - output A + V max and is a good representation of the true position of the rod 26 until output B saturates. When this occurs the curved upper part of the plot goes into error and the dotted line indicates the true position. Plot C corresponds to output A + output B - V max and gives an indication of the level of signal corruption.

Figure 7 shows a plot of S - C/4. In this example it is considered undesirable that the displacement of the rod 26 is ever interpreted as being greater from its zero position than is in reality the case. Hence one quarter of the signal corruption C is subtracted from the S value as shown in figure 6. At time $T_1$ output B is approaching saturation and scaling is thus carried out as signal corruption is becoming less effectively rejected. The action shown in figure 7 is to fade in a 50% scaling factor to S.

An alternative solution may be to use additional divider resisters which may be switched in to the output to increase the dynamic range. Figure 3 shows an example of such a circuit. When signal corruption causes an input to the computer 16 to approach saturation S1 and S3 or S2 and S4 may be closed to increase the dynamic range of the corruption rejection system. Alternatively S1, S2, S3 and S4 may all be closed together.

Yet another way of obtaining an accurate check of signal corruption may be to use information from other sources for cross checking purposes. For example a car throttle position potentiometer reading may be checked against inlet manifold pressure.

Although the invention has been described with reference to potentiometric sensors having a linear relationship it is equally applicable to potentiometric sensors having a logarithmic relationship provided that the outputs change by an equal and opposite amount for a pre-determined displacement.

Although the invention has been described with reference to two potentiometric sensors it will be appreciated that these could be combined into a single unit having two separate resistive tracks and two separate pickups.

## Claims

1. A displacement sensing system comprising, a source of direct current electrical potential (11), a first potentiometric displacement sensor (12) having a first resistance means (20) connected to said source of electrical potential and a first moveable pickup (21) in contact with said resistance means to provide a variable potential to a first potential difference sensing means (14) depending upon its position on the first resistance means (20), a second potentiometric displacement sensor (13) having a second resistance means (23) connected to said source of electrical potential (11) and a second moveable pickup (24) in contact with said resistance means to provide a variable potential to a second potential difference sensing means (15) depending upon its position on the second resistance means (23), the first and second moveable pickups (21, 24) being mechanically coupled together to move in unison with a device (26) the displacement of which is to be sensed characterised in that the first and second potentiometric displacement sensors (12, 13) are so connected that for a pre-determined displacement of the device (26) in one direction the potential difference as sensed by the first potential difference sensing means (14) increases by a unit amount and the potential difference as sensed by the second potential difference sensing means (15) decreases by a unit amount and when the device (26) is moved a pre-determined displacement in the opposite direction the potential difference as sensed by the first potential difference sensing means (14) decreases by a unit amount and the potential difference as sensed by the second potential difference sensing means (15) increases by a unit amount.

2. A displacement sensing system as claimed in claim 1 in which the system further comprises a signal analysing means (16) connected to said first and second potential difference sensing means (14, 15) and operative to add the signal received from the first potential difference sensing means to the signal received from the second potential difference sensing means.

3. A displacement sensing system as claimed in claim 1 or in claim 2 wherein the signal analysing means (16) is operative to subtract the signal received from one of the first and second potential difference sensing means (14, 15) from the signal received from the other of the first and second potential difference sensing means( (14, 15).

4. A displacement sensing system as claimed in any preceding claim in which the first and second potential difference sensing means are digital voltmeters (14, 15).

Fig. 1

Fig. 2

Fig. 3

Fig. 4

Fig. 5

Fig. 6

Fig. 7

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | PATENT ABSTRACTS OF JAPAN, vol. 9, no. 86 (P-349)[1809], 16th April 1985; & JP-A-59 216 201 (SONY K.K.) 06-12-1984 | 1,3 | G 01 D 5/16 |
| | – – – | | |
| Y | DE-A-3 634 051 (PHILIPS PATENTVERWALTUNG GmbH) * Figure 1 * | 1,3 | |
| | – – – – – | | |

**TECHNICAL FIELDS SEARCHED (Int. Cl.5)**

G 01 D

The present search report has been drawn up for all claims

| Place of search | Date of completion of search | Examiner |
|---|---|---|
| The Hague | 19 August 91 | LUT K. |

CATEGORY OF CITED DOCUMENTS

X : particularly relevant if taken alone
Y : particularly relevant if combined with another document of the same catagory
A : technological background
O : non-written disclosure
P : intermediate document
T : theory or principle underlying the invention

E : earlier patent document, but published on, or after the filing date
D : document cited in the application
L : document cited for other reasons

& : member of the same patent family, corresponding document